# EUROPEAN PATENT APPLICATION

(11) **EP 2 511 577 A1**
(43) Date of publication of application: **17.10.2012**
(21) Application number: 10835523.1
(22) Date of filing: 10.12.2010
(51) Int. Cl.: F16J 15/18

(54) **HYDRAULIC CYLINDER INCLUDING A VARIABLE-SHAPE O-RING**

(30) Priority: 11.12.2009 ES 200902318
(71) Applicant: Grupo De Ingenieria Aceanica, S.L., 38390 - Santa Ursula, Tenerife - Islas Canarias (ES)
(72) Inventor: DEL CAMPO Y RUIZ DE ALMODOVAR, Cesar, E-11500 El Puerto de Santa Maria (Cádiz) (ES)
(74) Representative: Garcia-Cabrerizo y del Santo, Pedro Maria
(86) International application number: PCT/ES2010/000511
(87) International publication number: WO 2011/070200

(57) **Abstract**

A new system of hydraulic and piston cylinders for the lifting of large loads manufactured based on commercial tubes, in which the cylinder tube (1), closed on its lower part possesses a welded and rigid washer (2) on its lower part and inside the aforementioned cylinder. The piston has another rigid washer welded to it (4) at a certain distance from the lower end and on its outer surface. Between the two there is an O-Ring seal (6) of variable geometry that is constructed with an elastomeric, compressable and deformable material of low friction and high elasticity and a free washer. The compression of the O-Ring seal makes up a system that closes, guaranteeing its watertightness.

## Description

### Objective of the invention

The objective of the invention consists of a new hydraulic cylinder system equipped with a piston for the lifting of loads constructed with an O-Ring seal of variable geometry and with low-cost commercial tubing and which allows for the lifting or pushing of any load.

### Background of the invention

Is it known that with a hydraulic cylinder, large loads can be lifted by simply introducing pressure through a hydraulic fluid through the base of the piston, which makes it move upwards or horizontally, making it possible to carry out pushing or pulling actions. However, as extraordinarily useful as these hydraulic cylinders are, they require steel tubing that is calibrated with surfaces protected as much on the inner surface as on the outer surface to avoid friction. In normal industrial applications, hydraulic cylinders are always reusable many times over, something for which industry can pay for a system that requires precision tubing calibrated and rectified and even with an anti-friction inner coating, which covers for the high costs with a very high level of re-use. However, in appliances of very large dimensions, and of one sole use or of several uses, and in those in which the the cylinders are part of the permanent structure of the installations, like oceanic platforms [rigs] or installations in the sea, for them to be kept afloat, for pile driving, etc, the use of calibrated and straightened tubes would bring with it a very high cost which would render the system unviable. For this, it is necessary to design an economically viable alternative which would permit the carrying of large sized loads. For this, this invention describes a hydraulic cylinder which involves a piston consistent with those used in commercial tubes, a low cost one which has an O-Ring seal of determinate characteristics inserted into it.

A commercial tube, unlike a calibrated and straightened tube, has universally accepted tolerances in its thickness, radius, and ovality. Variable tolerances are accepted up to a certain level. Hence, if the tube has a tolerance and the piston also has one, it would be impossible to make, with techniques known up to now, an O-Ring seal which would guarantee watertightness with that difference in dimensions. What makes the process more complex is that the coating tolerances are not continuous, in other words, at the end of a tube, there can be one radial tolerance and in the centre there can be another radial tolerance, or that the ovality can be different at the end than in the centre, hence, it is necessary to develop an O-Ring seal that would permit the use of low cost commercial tubes, thus solving the aforementioned problems of viability.

### Description of the invention

This invention consists of a tube which we shall call a cylinder tube which closes at the bottom to become a watertight chamber. This cylinder tube bears a welded and rigid washer on the upper part inside the said cylinder. Another tube, which is a piston, introduced inside the cylinder tube, is open on its lower part and, a certain distance from its lower end, has another rigid washer, welded and with threaded drill holes around its whole edge, similar to that of the cylinder tube, but welded on the exterior of the piston.

The tubes used are commercial tubes, of lower cost than calibrated straightened tubes.

Beneath the soldered washer, the piston has an O-Ring seal of variable geometry with through bores introduced into it, which is constructed of an elastomeric compressable and deformable material of low friction and high elasticity. The joint does not touch the cylinder tube but rather there remains a certain looseness. Under the O-Ring seal another washer is placed, which will be loose and with bores in line with those of the fixing. The O-Ring seal, compresses up to a predetermined pressure and which guarantees that it will adapt in full to the relative variations of the cylinder and of the piston in compressing itself through the turning of the taps, up to the predetermined pressure, changing shape and adapting until it closes up completely.

The way the hydraulic cylinder with drill holes in the washers and in the O-Ring seal functions will be explained further on.

Bolts are then put into the washer, which cross go through the O-Ring seal and the washer welded to the piston and they start to grip up to the point where the grip pressure is what has been determined.

Whilst the seal is not touching the wall of the tube of the cylinder, there is no grip resistance, because the seal, being elastic, starts to deform. When the seal then touches the inner wall the bolts continue to be tightened up to the point that the seal closes completely.

The loose washer has an indeterminate number of holes, which there will be more of depending on the diameter of the tube. Its function is to compress and adjust the seal.

The bolts are not tightened simultaneously, but rather one by one, in such a way that when the bolt reaches the determined pressure, we tighten the other(s) and so on, successively. In this way, if there are differences of radius or ovality in one place or another, we can resolve it by suitably adjusting each bolt.

This system allows for a telescopic series of the desired sizes, the piston tube simply becomes the cylinder tube of another more internal tube and each tube has a rigid washer welded on the upper and inner part of itself, just as the more external tube and the inner tubes would have the washer welded at a certain distance from its base, the O-Ring seal and the loose washer.

### Description of the figures

To complete the description being given here and with the aim of aiding better understanding of the characteristics of the invention, there is a diagram where, in an illustrative and not limitative way, the following has been represented:

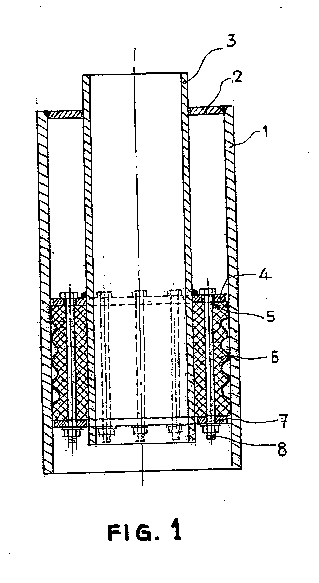

Figure 1: View of a vertical section of the hydraulic cylinder with a variable O-Ring seal

What follows below is the provision of a list with the reference numbers used in the figures:
1.- Cylinder tube
2.- Welded washer on the cylinder tube
3.- Piston
4.- Washer welded to the piston
5.- Bores
6.- O-Ring seal
7.- Loose washer

### Detailed description of the invention

To manage to have a better understanding of the invention whose description follows below, with the aid of the figures, the new hydraulic cylinder and lifting piston constructed with an O-Ring seal of variable geometry.

The cylinder tube (1) closed in its lower part presents a rigid washer (2), welded on the upper part of the tube and to its own inside. The lifting piston (3), situated inside the cylinder tube (1), is open at the bottom and, at a certain distancie from the lower end, presents another welded rigid washer (4), but on the outer surface of the piston. This washer presents a series of bores around it (5). Under the washer (4) welded to the piston, an O-Ring seal is placed (6), which has a certain looseness, with the same number and position of bores as the washer of the (4) piston. This washer is made of an elastomeric material of low friction and high elasticity. Under the O-Ring seal, another washer is placed (7) which will be loose. This loose washer also has bores for the introduction of bolts.

The bolts are tightened to the point that the seal compresses enough to close the space completely. The hydraulic fluid used can also help to compress the seal.

## Claims

1. A hydraulic cylinder with an O-Ring seal of variable geometry for the lifting or pushing of any load **characterised by** comprising of:
- A cylinder tube (1) closed on its inside that is equipped with a welded rigid washer (2) in the upper and inner parts of said cylinder,
- A piston (3) which at a certain distance of its lower end and on its outer surface has another rigid washer welded to it (4),
- An O-Ring seal (6) of variable geometry which is constructed of an elastomeric, compressible and deformable material, of low friction and high elasticity situated between the cylinder tube and the piston and
- One loose washer (7) between the cylinder tube and the piston,
With (1) being the cylinder tube and (3) being the piston and commercial pipelines.

2. The hydraulic cylinder in patent claim 1, is claimed because the washer (4) welded to the piston, the O-Ring seal (6) and the free washer (7) present some bores (5) for the insertion of bolts that allow for the tightening and compression of the O-Ring seal (6).

3. Hydraulic cylinder in patent claim 2, is claimed because it comprises of a series of bolts to compress the O-Ring seal (6).

4. O-Ring seal (6) of variable geometry that is constructed of an elastomeric, compressable and deformable material of low friction and high elasticity for its use in the hydraulic cylinder from patent claim 1.

## Amended claims

### Amended claims under Art. 19.1 PCT

1. A hydraulic cylinder with an O-Ring seal of variable geometry for the lifting or pushing of any load **characterized by** comprising:
- A cylinder tube (1) closed on its inside that is equipped with a welded rigid washer (2) in the upper and inner parts of said cylinder,
- A piston (3) which at a certain distance of its lower end and on its outer surface has another rigid washer welded to it (4),
- An O-Ring seal (6) of variable geometry which is constructed of an elastomeric, compressible and deformable material, of low friction and high elasticity situated between the cylinder tube and the piston and
- One loose washer (7) between the cylinder tube and the piston,
being the cylinder tube (1) and the piston (3) commercial pipelines, wherein the washer (4) welded to the piston, the O-Ring seal (6) and the free washer (7) present some bores (5) for the insertion of bolts that allow for the tightening and compression of the O-Ring seal (6).

2. A hydraulic cylinder according to claim 1, **characterized by** comprising a series of bolts to compress the O-Ring seal (6).

3. O-Ring seal (6) of variable geometry that is constructed of an elastomeric, compressable and deformable material of low friction and high elasticity which also presents a series of through bores (5) for the insertion of bolts for its use in the hydraulic cylinder from patent claim 1.
